Europäisches Patentamt

European Patent Office

Office européen des brevets

(19)

(11) Publication number: **0 008 506**
**A2**

# EUROPEAN PATENT APPLICATION

(12)

(21) Application number: **79301556.1**

(22) Date of filing: **02.08.79**

(51) Int. Cl.³: **A 01 N 43/88**
**A 01 N 47/30, C 07 D 285/16**
**//(A01N43/88, 39/02, 37/40),**
**(A01N47/30, 43/88, 39/02, 37/40)**

(30) Priority: **19.08.78 GB 3396378**
**02.02.79 GB 7903757**
**24.02.79 GB 7906616**
**16.03.79 GB 7909428**

(43) Date of publication of application:
**05.03.80 Bulletin 80/5**

(84) Designated Contracting States:
**AT BE CH DE FR GB IT LU NL SE**

(71) Applicant: **FISONS LIMITED**
**Fison House 9 Grosvenor Street**
**London(GB)**

(72) Inventor: **van Hoogstraten, Samuel David**
**36 Butchers Hill**
**Ickleton, Cambridge(GB)**

(72) Inventor: **Ayres, Robert John**
**9 Greenfield Close**
**Stapleford, Cambridge(GB)**

(72) Inventor: **Gillings, Christopher**
**1 Primrose Way**
**Linton, Cambridge(GB)**

(72) Inventor: **Prescott, Frank Arthur Anthony**
**7 Hudson Close**
**Haverhill, Suffolk(GB)**

(74) Representative: **Murphy, Finnbarr et al,**
**Fisons Limited Fison House Princes Street**
**Ipswich 1P1 1QH(GB)**

(54) Herbicidal heterocyclic compounds and compositions and methods for their use.

(57) The invention provides a method of combating weeds which comprises applying to the locus which is infested or liable to be infested with them an effective amount of: (A) bromoxynil, (B) ioxynil, (C) CMPP and (D) linuron and/or bentazone. The invention also provides a herbicidal composition comprising from 0.05 to 99% by weight of (A), (B), (C) and (D) in association with a suitable carrier and/or surface active agent. Also provided are novel salts of bentazone with an alkylamine of 8 to 18 carbon atoms.

EP 0 008 506 A2

Croydon Printing Company Ltd.

33963/78

This invention relates to a herbicide.

The invention provides a method of combating weeds at a locus infested or liable to be infested with them, which method comprises applying to the locus an effective amount of:

(A)   bromoxynil;

(B)   ioxynil;

(C)   CMPP; and (D)   linuron and/or bentazone.

The invention also provides a herbicidal composition comprising (A), (B), (C) and (D).

Bromoxynil is 3,5-dibromo-4-hydroxybenzonitrile or a salt or functional derivative thereof. Ioxynil is 4-hydroxy-3,5-di-iodobenzonitrile or a salt or functional derivative thereof. CMPP is 2-(4-chloro-2-methylphenoxy)propionic acid or a salt or functional derivative thereof. Linuron is 3-(3,4-dichlorophenyl)-1-methoxy-1-methylurea. Bentazone is 3-isopropyl-(1H)-benzothiadiazin-4(3H)-one 2,2-dioxide or a salt thereof.

Each of (A), (B), (C) and (D) is known as a herbicide, but the present combination of all 4 is surprisingly advantageous. A combination of 4 herbicides is most unusual. The present combination affords a surprisingly good combination of safety to crops and activity against weeds. It can be employed to control a wide range of weeds at a low dose without damaging crops. For instance, the combination selectively combats all major weeds in cereal crops such as wheat and barley, and has surprisingly good activity in particular against chickweed, speedwells, mayweed and cleavers.

As is common in the herbicide art, references are made in this specification just to 2-(4-chloro-2-methylphenoxy)propionic acid, its salts and functional derivatives, although only the dextro isomer is herbicidally active. The references are based on the compound being present as the racemic mixture, which it usually is; the proportions and rates of dextro isomer are then clearly half the amounts stated for the compound. If the racemic mixture is not employed, the required amount (i.e. the amount required to provide the same weight of dextro isomer as if the racemic mixture had been employed) can readily be calculated.

In the present invention, (A), (B), (C) or (D) can be used as the free chemical named above or as a salt or functional derivative thereof where such exists. Such use is common in the herbicide art. Proportions, ratios and rates specified herein are in terms of the free chemical, and are by weight. The corresponding amounts for salts and functional derivatives can readily be calculated.

Salts which may be employed include alkali metal (for example lithium, sodium or potassium) salts, ammonium salts, alkylamine salts in which the or each alkyl radical contains 1-18, especially 1-6, carbon atoms (e.g. dimethylamine salts), and alkanolamine salts in which the or each alkanol radical contains 1-4 carbon atoms (for example ethanolamine or diethanolamine salts).

CMPP functional derivatives include esters (particularly with alkanols of 1-10 carbon atoms), amides and alkyl amides in which the or each alkyl radical contains 1-6 carbon atoms.

Bromoxynil or ioxynil functional derivatives include esters (particularly with alkanoic acids of 1-16 carbon atoms, e.g. the octanoate).

The CMPP, bromoxynil and ioxynil may conveniently be in the form of salts. Sodium and/or potassium salts are preferred.

The bentazone is conveniently employed as the free compound or as a salt, especially with a $C_8$ to $C_{18}$ alkylamine. The alkylamine salt may be an n-alkylamine salt, e.g. the n-octylamine, n-decylamine or n-dodecylamine salt, or more preferably a tertiary alkylamine salt, e.g. the N,N-dimethyl-n-dodecylamine salt. The salts with the $C_8$ to $C_{18}$ alkylamines are novel compounds, and thus invention provides them per se. Unlike the known derivatives of bentazone, they are compatible with organic carriers, and are th s particularly suitable for use in emulsifiable concentrate formulations.

Component (D) preferably comprises linuron alone or a mixture of linuron and bentazone. Where component (D) comprises a mixture thereof, the weight ratio of linuron to bentazone is preferably from     to     :1.

The proportions of the essential components can vary over a wide range depending on such factors as the locus treated and the effect desired. Usually, the respective proportions of (A):(B):(C):(D) are 1-10: 1-10: 4-100: 1-30. Preferably the respective proportions of (A):(B):(C):(D) are 0.05-0.8: 0.05-0.8: 0.2-4.0: 0.02-1.2, a

- 4 -

specific preferred proportion being 0.36: 0.36: 2.0: 0.075 (where component (D) is or contains linuron) or 0.3 (where component (D) is bentazone alone).

The present compositions can be prepared by admixing the ingredients, and preferably contain from 0.05 to 99% by weight in total of the essential components. Usually the compositions are initially produced in the form of concentrates, e.g. containing 0.5-85%, preferably 20 to 60%, in toto of the present essential components, and these concentrates are diluted with water or hydrocarbon, usually water, for application, generally such that the concentration of the essential components in toto is 0.05-5%, though in ultra low volume application the concentration may be higher, e.g. up to 20%.

The compositions normally contain a surface active agent and/or a carrier.

The carrier may be a liquid, e.g. water (e.g. water used to dilute a concentrate for application). If water is employed as carrier in a concentrate, an organic solvent may also be present as carrier, though this is not usually employed. A surface active agent may advantageously be present.

The carrier may be a liquid other than water, for example an organic solvent, such as a water immiscible solvent, e.g. a hydrocarbon which boils within the range 130-270°C, in which the essential compounds are dissolved or suspended. A concentrate containing a water immiscible solvent suitably also contains a surface active agent so that the concentrate acts as a self-emulsifiable oil on admixture with water. The liquid may be a water-miscible solvent e.g. 2-methoxy ethanol, methanol, propylene glycol, diethylene glycol, diethylene glycol monoethyl ether, formamide, methylform-amide, cyclohexanone or isophorone.

The carrier may be a solid, which may be finely divided. Examples of suitable solids are limestone, clays, sand, mica, chalk, attapulgite, diatomite, perlite, sepiolite, silicas, silicates, lignosulphonates, peat and solid fertilizers. The carrier can be of natural or synthetic origin or can be a modified natural material.

Wettable powders soluble or dispersable in water may be formed by admixing the essential compounds in particulate form with a particulate carrier or spraying the compounds molten on to the particulate carrier, admixing a wetting agent and a dispersing agent and finely grinding the whole powder mixture.

An aerosol composition may be formed by admixing the essential compounds with a propellant e.g. a polyhalogenated alkane such as dichlorodifluoromethane, and suitably also with a solvent.

A flowable suspension concentrate may be formed by grinding the compounds with water, a wetting agent and a suspending agent, e.g. xanthan gum.

A flowable suspension concentrate wherein the carrier is a hydrocarbon, e.g. xylene, which boils within the range 130-270$^{\circ}$C rather than water may be formed.

Thus the present composition can for example be solid (e.g.

dust or granules) and contain a solid carrier, or liquid (e.g. an emulsifiable concentrate) and contain a liquid carrier, e.g. xylene, which is a hydrocarbon which boils within the range 130-270°C.

The term 'surface active agent' is used in the broad sense to include materials variously called emulsifying agents, dispersing agents and wetting agents. Such agents are well known in the art.

The surface active agents used may comprise anionic surface active agents, for example soaps, mono- or di-esters of phosphoric acid with fatty alcohol ethoxylates or salts of such esters, fatty alcohol sulphates such as sodium dodecyl sulphate, sodium octadecyl sulphate or sodium cetyl sulphate, ethoxylated fatty alcohol sulphates, ethoxylated alkylphenol sulphates, lignin sulphonates, petroleum sulphonates, alkyl-aryl sulphonates such as alkyl-benzene sulphonates or lower alkylnaphthalene sulphonates e.g. butyl-napthalene sulphonate, salts of sulphonated naphthalene-formaldehyde condensates, salts of sulphonated phenol-formaldehyde condensates, or more complex sulphonates such as the amide sulphonates e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or fatty-, alkyl- or alkenyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, dialkyl sulphosuccinates, alkyl phenol ethoxylates, and fatty alkyl ethoxylates.

Non-ionic surface active agents are preferred.

Instead of applying the present essential components (A) - (D) in a composition comprising all 4 of them, they can be applied in sequence so that one first applies a composition comprising 1, 2 or 3 of them and later applies the remainder either together or, where there is more than 1, in sequence in their turn. Where compositions comprising 1, 2 or 3 of the present essential components are applied, the compositions can be analogous to those described above but comprising just the 1, 2 or 3 essential components Application of all 4 essential components together is most convenient.

The invention provides a one pack presentation, in which the 4 essential components are already admixed, and also a single package designed to hold the 4 essential components so that 2 or more of them are in separate containers, for mixing, e.g. in a spray tank, for application.

The essential compounds can be used in admixture or sequence with another pesticide, particularly another herbicide, and especially with difenzoquat, barban, benzoylprop-ethyl or flamprop-isopropyl. The admixture is especially advantageous.

The essential compounds may be used in admixture or sequence with a non-phytotoxic oil, e.g. Agri-Oil Plus, Sun Oil 11E or Fyzol 11E.

The essential compounds may be employed in association with a herbicidal antidote (a substance having the property of improving the safety to crops of the compounds), e.g. N,N-diallyl-2,2-dichloro-acetamide, 4'-chloro-2-hydroxyiminoacetanilide, 1,8-naphthalic anhydride, $\alpha$-(cyanomethoxyimino)benzacetonitrile or 2,2-dimethyl-3-dichloroacetyloxazolidine. Although the antidote may be applied in admixture with one or more of the essential components it is preferably applied separately, and especially as a treatment for the crop seeds. The ratio by weight of total herbicide to antidote is preferably from 1:2 to 8:1.

The present essential compounds may be used in admixture or sequence with inorganic salts, for example ammonium sulphate, which improve the activity of some herbicides. For this, the inorganic salts may be applied for example at 0.5-20, e.g. 2, kg

per hectare, and may for instance be admixed with the present essential compounds in a spray tank immediately before use.

The present essential compounds may be employed in admixture or sequence with a fertilizer.

The essential compounds may be applied to plants, the soil, land or aquatic areas. The combination is active against a wide range of weeds; for instance, in winter cereal crops it can be used to control mayweed (Matricaria spp), chickweed (Stellaria media), speedwell (Veronica spp), cleavers (Galium aparine) and viola spp, and in spring cereal crops it can be used to control mayweed, chickweed, knotgrass (Polygonum aviculare), blackbindweed (Polygonum convolvulus) and redshank (Polygonum persicaria). The combination is preferably used to combat weeds selectively at a locus at which a crop, e.g. a cereal crop, especially wheat or barley, is growing or, less preferably, is to grow immediately after application.

The combination may be employed for pre-emergence use, though preferably it is employed for post-emergence use.

Preferably 0.5-8.0 kg in total of the essential components are applied per hectare, especially 0.6-8.0 kg per hectare to winter cereal crops or 0.5-5.0 kg per hectare to spring cereal crops.

As stated hereinbefore, the salts of bentazone with $C_8$ to $C_{18}$ alkylamines are novel compounds. They may be prepared by reacting bentazone in an appropriate solvent medium with the appropriate amine.

Suitable solvents include for example the alkanols, e.g. methanol, ethanol and isopropanol, or aromatic hydrocarbon fractions.

The reaction may be effected for example at a temperature of from $0^{\circ}C$ to the reflux temperature, e.g. $80^{\circ}C$, and is conveniently carried out at room temperature.

The invention also provides a herbicidal composition which comprises one or more of the $C_8$ to $C_{18}$ alkylamine salts of bentazone in association with a suitable carrier and/or surface active agent. The compositions may be prepared analogously to the compositions described hereinbefore.

The novel alkylamine salts of benzatone are particularly suitable for co-formulation with derivatives of other herbicides, especially esters thereof, which have previously only been provided in the form of emulsifiable concentrates. Furthermore, since the novel salts are less acidic than the free compound there is a much reduced risk of the compound attacking acid-sensitive derivatives (e.g. esters) of other herbicides.

The novel alkylamine salts of bentazone are particularly suitable for use in the 4-component mixtures described hereinbefore, particularly with esters of bromoxynil, ioxynil and CMPP. The octanoate esters of bromoxynil and ioxynil and the iso-octyl ester of CMPP are preferred.

The invention is illustrated by the following Examples.

Examples 1-27

Field trials were conducted at various sites on each of winter wheat, winter barley and spring barley. Post-emergence there was sprayed onto randomised plots in which they were growing a tank mix of bromoxynil, ioxynil, CMPP and bentazone at the rates shown in the Table below. Spraying was at a volume of 200 litres per hectare. The winter cereals were at the stage from mid tillering up to early jointing on spraying, and the spring barley from the 3 leaf stage up to early jointing on spraying. The bromoxynil, ioxynil and CMPP were each employed as its potassium salt. The bentazone was employed as the free compound. The treatments carried out were as follows.

| Example | Crop | Rate, kg per ha | | | |
|---|---|---|---|---|---|
| | | Bromoxynil | Ioxynil | CMPP | Bentazone |
| 1 | Winter wheat | 0.36 | 0.36 | 2.8 | 0.50 |
| 2 | " " | 0.23 | 0.23 | 1.8 | 0.31 |
| 3 | " " | 0.18 | 0.18 | 1.4 | 0.25 |
| 4 | Winter barley | 0.36 | 0.36 | 2.8 | 0.50 |
| 5 | " " | 0.23 | 0.23 | 1.8 | 0.31 |
| 6 | " " | 0.18 | 0.18 | 1.4 | 0.25 |
| 7 | Winter wheat | 0.30 | 0.30 | 1.6 | 1.1 |
| 8 | " " | 0.19 | 0.19 | 1.0 | 0.69 |
| 9 | " " | 0.15 | 0.15 | 0.8 | 0.55 |
| 10 | Winter barley | 0.30 | 0.30 | 1.6 | 1.1 |
| 11 | Winter barley | 0.19 | 0.19 | 1.0 | 0.69 |
| 12 | " " | 0.15 | 0.15 | 0.8 | 0.55 |
| 13 | Winter wheat | 0.30 | 0.30 | 3.8 | 0.4 |
| 14 | " " | 0.19 | 0.19 | 2.4 | 0.25 |
| 15 | " " | 0.15 | 0.15 | 1.9 | 0.2 |

| Example | Crop | Rate, kg per ha | | | |
|---|---|---|---|---|---|
| | | Bromoxynil | Ioxynil | CMPP | Bentazone |
| 16 | Winter barley | 0.30 | 0.30 | 3.8 | 0.4 |
| 17 | " " | 0.19 | 0.19 | 2.4 | 0.25 |
| 18 | " " | 0.15 | 0.15 | 1.9 | 0.2 |
| 19 | Spring barley | 0.24 | 0.24 | 1.84 | 0.34 |
| 20 | " " | 0.15 | 0.15 | 1.15 | 0.21 |
| 21 | " " | 0.12 | 0.12 | 0.92 | 0.17 |
| 22 | " " | 0.2 | 0.2 | 1.06 | 0.72 |
| 23 | " " | 0.13 | 0.13 | 0.66 | 0.45 |
| 24 | " " | 0.1 | 0.1 | 0.53 | 0.36 |
| 25 | " " | 0.2 | 0.2 | 2.5 | 0.26 |
| 26 | " " | 0.13 | 0.13 | 1.56 | 0.16 |
| 27 | " " | 0.1 | 0.1 | 1.25 | 0.13 |

The percentage weed control of each species was assessed, 4-6 weeks after spraying the winter cereals and 3 weeks after spraying the spring barley. The results on the winter wheat were the same as those on the winter barley at the same rate. The results were as follows:

Winter Wheat and Winter Barley

| Example | % Weed Control | | | | |
|---|---|---|---|---|---|
| | Mayweed | Chickweed | Cleavers | Speedwell | Viola |
| 1 and 4 | 99 | 70 | 100 | 95 | 99 |
| 2 and 5 | 95 | 62 | 100 | 90 | 77 |
| 3 and 6 | 92 | 43 | 95 | 80 | 64 |
| 7 and 10 | 98 | 50 | 100 | 95 | 90 |
| 8 and 11 | 97 | 41 | 89 | 47 | 55 |
| 9 and 12 | 97 | 19 | 99 | 54 | 57 |
| 13 and 16 | 98 | 80 | 95 | 90 | 95 |
| 14 and 17 | 95 | 63 | 99 | 75 | 75 |
| 15 and 18 | 90 | 33 | 90 | 62 | 40 |

Spring Barley

| Example | % Weed Control | |
|---|---|---|
| | Mayweed | Knotgrass |
| 19 | 100 | 98 |
| 20 | 64 | 82 |
| 21 | 79 | 66 |
| 22 | 99 | 100 |
| 23 | 81 | 82 |
| 24 | 88 | 71 |
| 25 | 99 | 95 |
| 26 | 71 | 75 |
| 27 | 65 | 69 |

No damage to the winter wheat, winter barley or spring barley was observed in any of the Examples.

Example 28

The following emulsifiable concentrate formulation:

|  | g (acid equivalent) |
| --- | --- |
| Bromoxynil octanoate | 50 |
| Ioxynil octanoate | 50 |
| CMPP iso-octyl ester | 280 |
| Linuron technical | 20 |
| Arylan CA (70% solution in ethanol of calcium dodecylbenzenesulphonate) | 55 |
| Ethylan C40 AH (condensation product of castor oil and 40 moles of ethylene oxide) | 45 |
| Xylene | 345 ml |

was prepared by dissolving the bromoxynil, ioxynil and linuron in xylene, and admixing with the other components.

Example 29

A formulation analogous to that of Example 28 was prepared with the exception that 50g of Arylan CA, 50g of Ethylan C40AH and 10g of linuron were employed.

Example 30

Trials were carried out by spraying post-emergence on broadleaf weeds to determine the efficacy of mixtures as set out below. After 4 weeks the percentage reduction relative to an untreated control (0%) in the weeds was recorded.

| | Rate of Application (kg ai/ha) | | | |
|---|---|---|---|---|
| Treatment No | Ioxynil | Bromoxynil | CMPP | Linuron |
| 1 | 0.0625 | 0.0625 | 0.35 | - |
| 2 | 0.0625 | 0.0625 | 0.35 | 0.025 |
| 3 | 0.0625 | 0.0625 | 0.35 | 0.0125 |

| | % Reduction relative to control (0%) | | | |
|---|---|---|---|---|
| Treatment No | Chickweed | Speedwell | Mayweed | Cleavers |
| 1 | 63 | 75 | 85 | 85 |
| 2 | 94 | 80 | 97 | 80 |
| 3 | 90 | 78 | 95 | 90 |

In the above trials the ioxynil was employed as octanoate ester, the bromoxynil was employed as octanoate ester, the CMPP was employed as iso-octyl ester, and the linuron was employed as 50% wettable powder.

Example 31

A trial analogous to Example 30 was carried out with the mixtures set out below. The bentazone was employed as its sodium salt.

| Treatment No | Rate of Application (kg ai/ha) | | | | |
|---|---|---|---|---|---|
| | Ioxynil | Bromoxynil | CMPP | Linuron | Bentazone |
| 1 | 0.04 | 0.04 | 0.23 | - | - |
| 2 | 0.04 | 0.04 | 0.23 | 0.02 | - |
| 3 | 0.04 | 0.04 | 0.23 | 0.01 | - |
| 4 | 0.04 | 0.04 | 0.23 | 0.01 | 0.03 |

| Treatment No | % Reduction relative to control (0%) | | | |
|---|---|---|---|---|
| | Chickweed | Speedwell | Mayweed | Cleavers |
| 1 | 77 | 91 | 67 | 75 |
| 2 | 100 | 97 | 65 | 87 |
| 3 | 98 | 93 | 70 | 80 |
| 4 | 97 | 95 | 75 | 95 |

Example 32

The n-dodecylamine salt of bentazone was prepared by dissolving a molar amount of n-dodecylamine in ethanol and adding a molar amount of bentazone which dissolved on reaction. The ethanol was then removed using a rotary evaporator giving the desired product.

Example 33

An emulsifiable concentrate formulation was prepared from the following:

| Bromoxynil (as octanoate ester) | 50g/1 (acid equivalent) |
| Ioxynil (as octanoate ester) | 50g/1 (acid equivalent) |
| CMPP (as iso-octyl ester) | 280g/1 (acid equivalent) |
| Bentazone (as n-dodecylamine salt) | 40g/1 (acid equivalent) |
| Sapogenat T 130 (surfactant by Hoechst) | 100g/1 |
| Naphtha 21/99 (petroleum naphtha fraction, boiling range 160-210$^{o}$C) | to volume |

The formulation was prepared by dissolving the ingredients in the Naphtha 21/99.

It was highly stable on storage at 0-25$^{o}$C and easily dilutable with water for application.

Example 34

Field trials were conducted at various sites on spring barley by spraying post-emergence onto randomised plots the formulations of Examples 28, 29 and 33 and an analogous formulation not containing any linuron or bentazone at a volume of 5.0 litres per hectare. The percentage weed control relative to an untreated control (0% control) was assessed in relation to various weed species 3 weeks after spraying. The results were as follows:-

|  | % weed control | | | | |
| --- | --- | --- | --- | --- | --- |
| Formulation | Chickweed | Cleavers | Mayweed | Redshank | Field Pansy |
| Ex 28 | 92 | 85 | 82 | 89 | 89 |
| Ex 29 | 85 | 72 | 89 | 81 | 81 |
| Ex 33 | 87 | 95 | 93 | 91 | 80 |
| Ex 33 (but no bentazone component) | 74 | 64 | 80 | 81 | 58 |

Claims:

1. A herbicidal composition which comprises from 0.05 to 99% by weight in total of (A) bromoxynil, (B) ioxynil, (C) CMPP and (D) linuron and/or bentazone, in association with a suitable carrier and/or a surface active agent.

2. A herbicidal composition according to claim 1 wherein component (D) comprises linuron alone.

3. A herbicidal composition according to claim 1 or claim 2 wherein the weight ratios of (A):(B):(C):(D) are in the range 1-10:1-10:4-100:1-30.

4. A herbicidal composition according to claim 3 wherein the weight ratios of (A):(B):(C):(D) are in the range 0.05-0.8:0.05-0.8:0.2-4.0: 0.02-1.2.

5. A herbicidal composition according to any of claims 1 to 4 wherein the amount in total of (A), (B), (C) and (D) is from 20 to 60% by weight.

6. A method of combating weeds at a locus infested or liable to be infested with them, which method comprises applying to the locus an effective amount of (A) bromoxynil, (B) ioxynil, (C) CMPP and (D) linuron and/or bentazone.

7. A method according to claim 6 wherein components (A), (B), (C) and (D) are applied to the locus in the form of a composition according to any of claims 1 to 5.

8. A method according to claim 6 or claim 7 wherein from 0.5 to 8.0 kg in total of components (A), (B), (C) and (D) are applied per hectare.

9. A salt of bentazone with an alkylamine of 8 to 18 carbon atoms.

10. A herbicidal composition which comprises from 0.05 to 99% by weight of one or more salts of bentazone with an alkylamine of 8 to 18 carbon atoms.